# EUROPÄISCHE PATENTSCHRIFT

(11) **EP 1 277 621 B1**
(45) Veröffentlichungstag und Bekanntmachung des Hinweises auf die Patenterteilung: **19.11.2003**
(21) Anmeldenummer: 01117242.6
(22) Anmeldetag: 17.07.2001
(51) Int. Cl.: B60R 19/18

(54) **Stossfänger für ein Kraftfahrzeug**
Bumper for a motor vehicle
Pare-chocs pour véhicule automobile

(43) Veröffentlichungstag der Anmeldung: 22.01.2003
(73) Patentinhaber: Benteler Automobiltechnik GmbH, 33102 Paderborn (DE)
(72) Erfinder: Knaup, Hans-Jürgen, 33175 Bad-Lippspringe (DE); Wang, Hui, Dr., 33102 Paderborn (DE); Müller, Oliver, 33100 Paderborn (DE)
(74) Vertreter: Ksoll, Peter, Dr.-Ing.

(56) Entgegenhaltungen:
- DE-A- 4 307 836
- DE-A- 19 849 358
- US-B1- 6 179 355
- US-B1- 6 199 937

## Beschreibung

Die Erfindung betrifft einen Stoßfänger für ein Kraftfahrzeug gemäß den Merkmalen im Oberbegriff von Anspruch 1.

Stoßfänger sind quer an Front und Heck eines Kraftfahrzeugs zwischen der die Karosserie abschließenden Kunststoffverschalung und dem Rahmen des Kraftfahrzeugs angeordnet. Sie sollen dazu beitragen, dass die Fahrzeugstruktur bei einem Anprall mit geringer Geschwindigkeit keine Beschädigung davonträgt. Oft sind zwischen den Querträger und die Längsträger noch Pralldämpfer, sogenannte Crashboxen geschaltet. Die Crashboxen absorbieren die aus einem Anprall resultierende Energie, indem diese in Verformungsarbeit umgewandelt wird.

Verschiedenartige Stoßfänger bzw. Stoßfängeranordnungen sind bekannt. So gehört durch die DE 44 13641 C1 ein Stoßfänger zum Stand der Technik mit einem als Energieabsorber ausgebildeten Querträger. Der Querträger ist zweiteilig ausgebildet und weist ein Rückenteil mit C-Profil zur Befestigung an der Fahrzeugkarosserie sowie ein das Rückenteil abdeckendes flaches Schließteil auf. Auf der Vorderseite des Querträgers ist ein Prallkörper angeordnet in Form eines sich über die Länge des Querträgers erstreckenden Vollprofils aus einem Energie absorbierenden Material, das bevorzugt aus Kunststoffschaum oder einer Wabenstruktur aus Kunststoff besteht.

Die DE 196 43 049 A1 offenbart einen Stoßfänger, dessen Querträger als ein aus zwei U-förmig profilierten Halbschalen aufgebautes Hohlprofil gebildet ist. Als Verstärkung sind in den Halbschalen Einlagen angeordnet, die in der neutralen Faser mit seitlichen Einschnitten versehen sind. Zusätzlich sind an den Befestigungsstellen Verstärkungswinkelstreifen angeordnet.

Die DE 43 07 836 A1 beschreibt einen Träger zur Energieabsorption mit sich gegenüberstehenden Wänden, welche an zumindest einer der Wände in Richtung auf die jeweils andere Wand weisende kegestumpfförmige Ausbuchtungen besitzen, die beim Auftreten einer Stoßbelastung hinreichender Intensität durch Rückstülpen verformt werden. Die Energieumsetzung bei einem Anprall erfolgt hierbei durch Deformation nach dem Rückstülpprinzip in dem Träger selbst, wobei an den Längsträgem des Kraftfahrzeugs möglichst geringe Verformungskräfte angreifen sollen.

Der umgekehrte Lösungsansatz, nämlich die Ausbildung eines möglichst steifen Stoßfängers für Kraftfahrzeuge, ist Gegenstand der DE 198 49 358 A1. Hierbei soll ein Biegeträger einen möglichst biegesteifen Mittelabschnitt besitzen, an den sich endseitige Deformationsabschnitte anschließen. Der Mittelabschnitt ist zur Aussteifung mit einer in seiner Längserstreckung verlaufenden Sicke versehen, die auf der dem Kraftfahrzeug abgewandten Stirnseite des Biegeträgers angeordnet ist. Der Mittelabschnitt kann zusätzlich gehärtet sein. Ein derartiger Biegeträger soll eingeleitete äußere Kräfte zunächst federnd abfangen und ohne Beschädigung in die Längsträger ableiten, wobei die Deformation und damit Energieumwandlung lediglich in den endseitigen Deformationsbereichen und gegebenenfalls zusätzlich zwischen den Längsträgem und dem Biegeträger geschalteten Crashboxen stattfindet.

Die verschiedenen Stoßfänger erfüllen ihre Funktion unterschiedlich gut. Zur Schadensbegrenzung bei Unfällen mit geringer Geschwindigkeit dienen in den Querträger integrierte Verstärkungen. Diese unterstützen z.B. bei einem Anprall mit 4 km/h in Tests gegen ein Pendel oder gegen eine Barriere die Schadensfreiheit des Querträgers und des Fahrzeugs.

Besonders hohe Anforderungen werden hierbei an die Verstärkungen bei amerikanischen Fahrzeugen gestellt. Hier hat sich ein Test etabliert, der allgemein als Pfahltest bezeichnet wird. Bei diesem Test wird ein Fahrzeug mit 8 km/h rückwärts gegen einen Pfahl gezogen. Der hierbei festzustellende Schaden wird ausgewertet und in Kombination mit anderen Tests für eine Bewertung der Schadensfreiheitsklasse herangezogen.

Der Erfindung liegt ausgehend vom Stand der Technik die Aufgabe zugrunde, einen Stoßfänger mit einem hinsichtlich Steifigkeit und Festigkeitsverhalten verbesserten Querträger zu schaffen, der insbesondere beim Einsatz in heckseitigen Stoßfängern eine Schadensbegrenzung ermöglicht.

Die Lösung dieser Aufgabe besteht nach der Erfindung in einem Stoßfänger gemäß den Merkmalen von Patentanspruch 1, bei dem in den Schalenabschnitt des Querträgers zumindest ein napfartig gestaltetes tiefgezogenes Verstärkungsbauteil eingegliedert ist, wobei durch die geometrische Auslegung des Verstärkungsbauteils eine Umleitung von Anprall kräften vom Querträger in die Pralldämpfer/Crashboxen erreicht wird.

Vorzugsweise besteht ein Verstärkungsbauteil aus Stahlblech. Die Herstellung ist im Zuge einer Massenfertigung rationell und kostengünstig möglich. Der Querträger und die Verstärkungsbauteile können in separaten Fertigungsvorgängen hergestellt werden. Anschließend werden die Verstärkungsbauteile im Querträger positioniert und mit diesem gefügt. Die geometrische Konfiguration hinsichtlich Widerstandsmoment sowie Festigkeits- und Steifigkeitsverhalten der Verstärkungsbauteile kann auf den jeweiligen Einsatzfall im Querträger abgestimmt werden. Je nach Kraftfahrzeuganforderungen können mehrere Verstärkungsbauteile an den fahrzeugtechnisch erforderlichen Stellen integriert werden.

Die Geometrie der Verstärkungsbauteile kann verschiedenartig sein. Für die Praxis sind ovale, runde oder rechteckige Zylinderquerschnitte denkbar. Sie werden partiell in den Querträger integriert und ermöglichen eine gezielte Anpassung hinsichtlich des Steifigkeits- und Festigkeitsverhaltens sowie des Biegeverlaufs beim Anprall. Die Grundkonzeption bleibt auch bei verschiedenen Fahrzeugtypen gleich. Eine Anpassung des Belastungsverhaltens erfolgt durch eine Abstimmung hinsichtlich Anzahl, Geometrie und Position der Verstärkungsbauteile.

Die Verstärkungsbauteile führen in der Kombination mit der Querträgerschale zu einer Wandstärkendopplung und -erhöhung an partiell kritischen Stellen des Stoßfängers und damit zu einer gezielten Abstimmung des Gesamtsystems auf die im betrieblichen Belastungsfall zu erwartenden Kraftverläufe.

Der Schalenabschnitt des Querträgers weist dabei einen zentralen Steg mit zwei Schenkeln auf, wobei das Verstärkungsbauteil eine konfigurativ an den Steg des Schalenabschnitts angepasste Stirnwand besitzt, die den Steg kontaktiert. Hier kann das Verstärkungsbauteil mit dem Steg an der Innenseite des Schalenabschnitts gefügt sein, beispielsweise schweißtechnisch. Das Verstärkungsbauteil kann den Steg partiell oder vollflächig kontaktieren. Als für die Praxis besonders vorteilhaft wird eine vollflächige Anlage der Stimfläche des Verstärkungsbauteils am Steg angesehen. Die einander kontaktierenden Flächen sind in ihrer Kontur aufeinander abgestimmt.

Das Verstärkungsbauteil kann nach dem Tiefziehvorgang vergütet werden. Dies ist insbesondere bei hohen Belastungen bzw. Ansprüchen an das Crashverhalten wie beim Pfahltest vorteilhaft.

Das lokale Anbringen der Verstärkungsbauteile führt bei einem Pfahltest zu einer Reduzierung der Eindringtiefe des Pfahls beim Anprall. Der erfindungsgemäße Stoßfänger weist eine belastungs- und funktionsgerechte Konstruktion des Querträgers auf. Eine Umleitung der Kräfte von dem Querträger auf die Pralldämpfer/Crashboxen ist gewährleistet. Dies führt zu einer Reduzierung des Schadens und letztendlich zur Verminderung etwaiger Reparaturkosten. Ferner kann eine Reduzierung des Gewichts des Querträgers erreicht werden. Da die Verstärkungsbauteile den Widerstand erhöhen, ist eine Wandstärkenreduzierung an anderen Bauteilen der Stoßfängeranordnung möglich, was sich gewichtsmäßig vorteilhaft auswirken kann.

Eine vorteilhafte Ausgestaltung des Erfindungsgedankens charakterisiert Patentanspruch 2, wobei der Schalenabschnitt Flansche aufweist und am Verstärkungsbauteil ein Kragen vorgesehen ist, der mit den Flanschen gefügt ist. Die Fügung kann mittels Punktschweißung oder Nahtschweißen realisiert sein. Auch andere Fügetechniken wie Kleben oder Clinchen sind denkbar. Bevorzugt sind die Flansche endseitig der Schenkel nach außen gerichtet. Grundsätzlich können die Flansche aber auch bezüglich des Schalenkörpers nach innen aufeinander zu gerichtet sein.

Die Verstärkungsbauteile übernehmen die Funktion eines Schließblechs für den schalenförmig konfigurierten Querträger, so dass ein Öffnen bzw. Aufspreizen der Schenkel nach außen bei einem Anprall vermieden wird.

Die Erfindung ist nachfolgend anhand von Zeichnungen beschrieben. Es zeigen:
- Figur 1: in perspektivischer Darstellungsweise ein Teilstück eines Querträgers;
- Figur 2: vergrößert einen Ausschnitt aus dem Querträger mit der Darstellung eines Verstärkungsbauteils;
- Figur 3: die perspektivische Darstellung eines Verstärkungsbauteils und
- Figur 4: das Verstärkungsbauteil gemäß Figur 3 in der Seitenansicht.

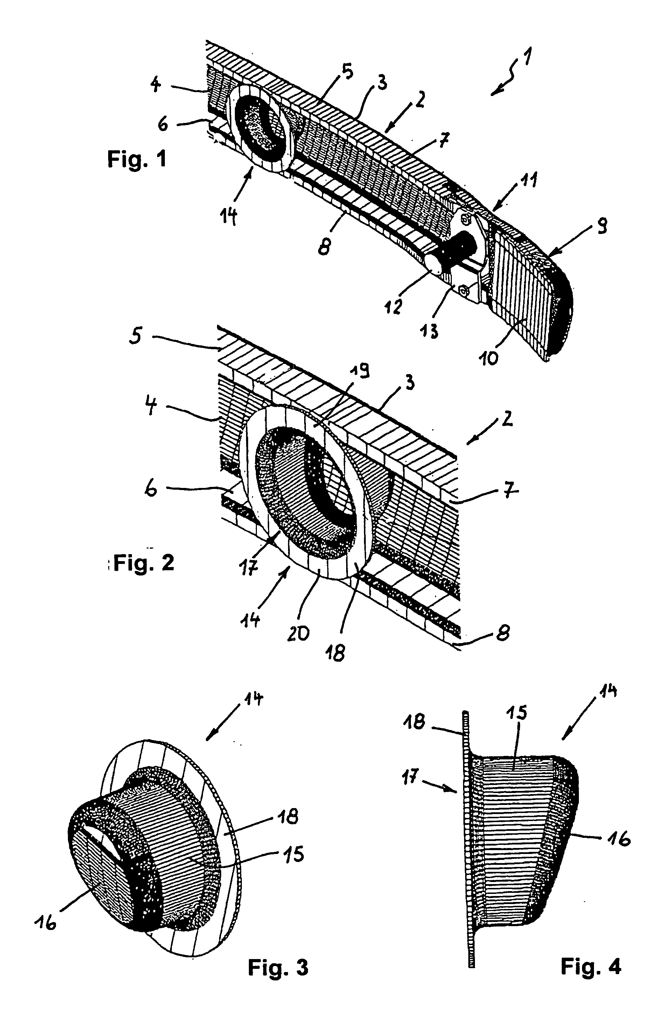

Die Figur 1 zeigt ein Teilstück eines Stoßfängers 1 für ein Kraftfahrzeug in einer Ansicht von hinten, also vom Kraftfahrzeug aus gesehen. Der Stoßfänger 1 umfasst einen quer zu den hier nicht dargestellten Längsträgern des Kraftfahrzeugs festlegbaren Querträger 2, der über den wesentlichen Teil seiner Länge einen im Querschnitt etwa U-förmig konfigurierten Schalenabschnitt 3 aufweist. Der Schalenabschnitt 3 besitzt einen zentralen Steg 4 mit zwei Schenkeln 5, 6 und sich hieran anschließenden, im Ausführungsbbeispiel nach außen gerichteten Flanschen 7, 8.

An seinen Enden 9 ist der Querträger 2 jeweils durch ein Schließblech 10 geschlossen. Ferner erkennt man in der Figur 1 den Anbindungsbereich 11 zur Crashbox bzw. einen Längsträger. Der Anbindungsbereich 11 umfasst ein bolzenartiges Koppelglied 12 sowie eine Anschlagplatte 13, die mit dem Querträger 2 verschraubt ist. Im Anbindungsbereich 11 sind der obere und untere Schenkel 5, 6 eingezogen, wodurch die Stabilität unterstützt wird.

In den Schalenkörper 3 ist ein napfartig gestaltetes tiefgezogenes Verstärkungsbauteil 14 eingegliedert (siehe hierzu auch Figur 2). Bei dem Verstärkungsbauteil handelt es sich um ein tiefgezogenes Stahlblechprodukt, welches nach dem Tiefziehvorgang vergütet worden ist. Das Verstärkungsbaueil 14 besitzt einen runden Zylinderabschnitt 15 mit einer konfigurativ an den Steg 4 des Schalenabschnitts 3 angepassten Stirnwand 16 (Figuren 3 und 4). Zum Steg 4 hin ist das Verstärkungsbauteil 14 durch die Stirnwand 16 geschlossen, wohingegen es am kraftfahrzeugseitigen Ende 17 offen ist und einen umlaufenden radial nach außen gerichteten Kragen 18 aufweist. Die Stirnwand 16 kontaktiert den Steg 4 vollflächig und ist mit diesem schweißtechnisch gefügt. Insbesondere anhand der Figur 4 erkennt man, dass die Stirnwand 16 in Bildebene von oben nach unten schräg nach hinten verläuft.

Das Verstärkungsbauteil 14 liegt mit dem oberen Abschnitt 19 und dem unteren Abschnitt 20 des Kragens 18 an den Flanschen 7 bzw. 8 an und ist dort vorzugsweise schweißtechnisch festgelegt. Auf diese Weise übernimmt das Verstärkungsbauteil 14 die Funktion eines Schließblechs und verhindert bei einem Anprall ein Auseinanderspreizen der Schenkel 5, 6.

Das in den Schalenabschnitt 3 integrierte Verstärkungsbauteil 14 führt zu einer partiellen Verstärkung des Querträgers 2 in kritischen Bereichen. Durch die belastungsgerechte geometrische Auslegung des Verstärkungsbauteils 14 wird eine Umleitung der Kräfte vom Querträger 2 in die Crashboxen erreicht. Der Querträger 2 weist ein verbessertes Steifigkeits- und Festigkeitsverhalten auf, so dass der Stoßfänger 1 insgesamt zu einer Reduzierung der Schäden am Kraftfahrzeug bei einem Anprall beitragen kann.

### Bezugszeichenaufstellung

- 1 -: Stoßfänger
- 2 -: Querträger
- 3 -: Schalenabschnitt
- 4 -: Steg
- 5 -: Schenkel
- 6 -: Schenkel
- 7 -: Flansch
- 8 -: Flansch
- 9 -: Ende v. 2
- 10 -: Schließblech
- 11 -: Anbindungsbereich
- 12 -: Koppelglied
- 13 -: Anschlagplatte
- 14 -: Verstärkungsbauteil
- 15 -: Zylinderabschnitt
- 16 -: Stirnwand
- 17 -: Ende v. 14
- 18 -: Kragen
- 19 -: Abschnitt v. 18
- 20 -: Abschnitt v. 18

## Patentansprüche

1. Stoßfänger für ein Kraftfahrzeug mit einem quer zu den Längsträgern des Kraftfahrzeugrahmens festlegbaren Querträger (2), welcher zumindest über einen wesentlichen Teil seiner Länge einen Schalenabschnitt (3) mit einem zentralen Steg (4) mit zwei Schenkeln (5, 6) aufweist, wobei in den Schalenabschnitt (3) zumindest ein napfartig gestaltetes tiefgezogenes Verstärkungsbauteil (14) eingegliedert ist, welches eine konfigurativ an den Steg (4) des Schalenabschnitts (3) angepasste Stirnwand (16) besitzt, die den Steg (4) kontaktiert, **dadurch gekennzeichnet, dass** der Verstärkungsbauteil (14) einen Zylinderquerschnitt aufweist, der Querträger (2) über Pralldämper/Crashboxen mit den Längsträgern des Kraftfahrzeugrahmens verbunden ist, wobei durch die geometrische Auslegung des Verstärkungsbauteils (14) eine Umleitung von Anprallkräften vom Querträger (2) in die Pralldämpfer / Crashboxen erreicht wird.

2. Stoßfänger nach Anspruch 1, **dadurch gekennzeichnet, dass** der Schalenabschnitt (3) Flansche (7, 8) aufweist und am Verstärkungsbauteil (14) ein Kragen (18) vorgesehen ist, der mit den Flanschen (7, 8) gefügt ist.

## Claims

1. A bumper for a motor vehicle with a cross-member (2) adapted to be fixed transversely of the longitudinal members of the motor vehicle frame, said cross-member comprising at least over a substantial part of its length a shell portion (3) with a central web (4) with two limbs (5, 6), there being incorporated in the shell portion (3) at least one deep-drawn reinforcing component (14) constructed in the shape of a cup, said component (14) having an end wall (16) the configuration of which is adapted to the web (4) of the shell portion (3) and which contacts the web (4), **characterised in that** the reinforcing component (14) has a cylindrical cross-section, the cross-member (2) is connected via impact dampers or crash boxes to the longitudinal members of the motor vehicle frame, impact forces being diverted from the cross-member (2) into the impact dampers or crash boxes by the geometric design of the reinforcing component (14).

2. A bumper according to claim 1, **characterised in that** the shell portion (3) comprises flanges (7, 8) and a collar (18) joined to the flanges (7, 8) is provided on the reinforcing component (14).

## Revendications

1. Pare-chocs pour véhicule automobile, comportant une traverse (2) susceptible d'être immobilisée transversalement aux longerons du châssis du véhicule automobile, laquelle comprend sur au moins une partie essentielle de sa longueur un tronçon formant coquille (3) avec une âme centrale (4) et avec deux branches (5, 6), au moins un composant de renforcement embouti (14) réalisé en forme de pot étant incorporé dans le tronçon formant coquille (3) et possédant une paroi frontale (16) adaptée par sa configuration à l'âme (4) du tronçon formant coquille (3) et venant en contact avec l'âme (4), **caractérisé en ce que** le composant de renforcement (14) présente une section cylindrique, la traverse (2) est reliée aux longerons du châssis du véhicule automobile via des caissons d'amortissement d'impact/collision, une déviation des forces d'impact de la traverse (2) dans les caissons d'amortisseurs d'impact/collision étant atteinte par la conception géométrique du composant de renforcement (14).

2. Pare-chocs selon la revendication 1, **caractérisé en ce que** le tronçon de coquille (3) comprend des brides (7, 8), et **en ce qu'**il est prévu une collerette (18) sur le composant de renforcement (14), laquelle est assemblée avec les brides (7, 8).
